**Europäisches Patentamt**

(19) **European Patent Office**

**Office européen des brevets**

(11) Publication number: **0 125 325**
**B1**

(12) # EUROPEAN PATENT SPECIFICATION

(45) Date of publication of patent specification: **17.08.88**

(51) Int. Cl.⁴: **G 21 C 1/00**

(21) Application number: **83104720.4**

(22) Date of filing: **13.05.83**

(54) **Nuclear reactor.**

(43) Date of publication of application:
**21.11.84 Bulletin 84/47**

(45) Publication of the grant of the patent:
**17.08.88 Bulletin 88/33**

(84) Designated Contracting States:
**BE DE FR GB IT SE**

(56) References cited:
**FR-A-1 230 671**
**FR-A-2 333 327**
**FR-A-2 399 714**
**US-A-3 060 111**

(73) Proprietor: **WESTINGHOUSE ELECTRIC CORPORATION**
**Westinghouse Building Gateway Center**
**Pittsburgh Pennsylvania 15222 (US)**

(72) Inventor: **Veronesi, Luciano**
**102 Glen David Drive**
**Pittsburgh Pennsylvania (US)**

(74) Representative: **Patentanwälte Dipl.-Ing. R. Holzer Dipl.-Ing. (FH) W. Gallo**
**Philippine-Welser-Strasse 14**
**D-8900 Augsburg (DE)**

Courier Press, Leamington Spa, England.

# Description

This invention relates to nuclear reactors and has particular relationship to reactors in which a coolant, typically water at critical temperature and pressure, is circulated through the nuclear core. The core includes the fuel and is disposed in the lower region of the reactor vessel. In addition, the reactor includes control-rod assemblies with control rods, supports for the control rods, drive rods for the control rods, guides for the control rods and other related components (U.S—A—4,146,430).

The control rods are mounted in clusters on their supports. There are rod clusters (RCC's) with rods having a high absorption cross-section for neutrons which are used to reduce the power or shut down the reactor. There are so-called grey control rods of substantially lower neutron absorption cross-section than the high-absorption RCC's and they serve for load follow or to moderate or control the power of the reactor. Grey rods are moved between the core and the guides many times (typically 5,600), substantially more than the high-absorpotion RCC's, during the fuel cycle of a reactor. There are water displacement clusters (WDRC's). These rods are approximately of the same diameter as the RCC's. Their function is to displace water coolant, from the core and so as to reduce the amount of moderators in the core. WDRC clusters are in the core during the early stages of core operation, typically during the first 60% of the fuel cycle, and are raised into the upper internals during the remainder, typically 40% of the fuel cycle. Typically the control rods are tubular. In this application and in its claims, the expression "control-rods", unless modified by wording signifying a specific type of rod, means any or all of the above-described control rods.

Typically, the RCC's and the grey rods in their clusters are carried by cruciform supports and are movable inside of hollow cruciform guides. These guides conventionally have slots through which coolant flows. The WDRC's are not so protected. A large number of these tubes are movable in rectangular or square guides which conventionally have holes through which the coolant flows. During the later part of the fuel cycle, the WDRC's are moved into and remain in perforated guides. All guides are part of the upper internals of the reactor.

The coolant flows vertically through the core and into the upper internals. The outlet nozzles of the vessel are disposed between the ends of the upper internals and they conduct the coolant horizontally. The coolant then flows generally horizontally or transversely through the control-rod assemblies in passing to the nozzles. Typically the vertical flow of the coolant through the core has a velocity of about 7—8 m/sec. The flow through the nozzles in prior art apparatus has a velocity of about 15 m/sec and the flow through some regions of the upper internals in prior art reactors may be as high as 10 or 13 m/sec. At these velocities, the coolant causes the vertical members and particularly the WDRC's, during the later part of the fuel cycle, to vibrate. At resonance velocities, the amplitude of vibration of the vertical members may be of the order of 25,4 mm (an inch) of more. At higher velocities there is cavitation. The vertical members of the upper internals and particularly the WDRC's are subject to failure by reason of fatigue by the continuous vibrations induced by the transverse flow and by the stresses induced by cavitation.

FR—A—2 399714 shows a nuclear reactor having a shroud surrounding the control rod guide assemblies in spaced relationship from an inner shell, and this shroud has a plurality of holes along substantially the whole extent thereof. Said inner shell is also provided with holes located opposite to the outlet nozzles, and the coolant leaving the plenum above the core passes the holes of said shroud and the holes in said inner shell to enter into said outlet nozzles.

It is the principal object of this invention to provide an improved arrangement in which failure of the components of the control-rod assemblies and particularly of the WDRC's by reason of the transverse flow of the coolant is avoided.

With this object in view, the present invention resides in a nuclear reactor including a vessel, a nuclear core within said vessel, an inner shell disposed within said vessel in spaced relationship therefrom so as to provide a coolant flow path to the bottom of said vessel, said vessel having at least an inlet nozzle in communication with said annular flow path and an outlet nozzle in communication with a plenum above said core which is surrounded by said inner shell for circulating coolant through said core, control-rod guide assemblies arranged within said vessel, and including control rods movable from the plenum above said core into said core, drive rods for said control rods and guide assemblies for said control rods within said plenum, the in-flowing coolant after passing through said core flowing transversely through said control-rod guide assemblies to said outlet nozzle in the normal operation of said reactor, and having a flow restricting shroud which surrounds said control-rod guide assemblies in spaced relationship from said inner shell so as to be disposed in the path of said transversely-flowing coolant, characterized by said shroud having along substantially the whole extent thereof holes of a size adapted to restrict coolant flow to said outlet nozzle, and has no holes in a limited region thereof opposite the outlet nozzle to the thereby suppress direct flow of said transversely-flowing coolant from the control-rod guide assemblies to said outlet nozzle.

With this arrangement the velocity of the transversely flowing coolant is reduced to such a degree that neither vibration of the components nor cavitation will occur, the speed being substantially lower than the resonant speed for the components involved. Typically this velocity is about 1.5 m/sec.

This invention arises from the realization that, in prior art reactors, the coolant, in flowing transversely through the control rod assemblies, is predominantly channeled almost directly through the outlet nozzles over a relatively small volume of the guides. This channeling increases the velocity of the coolant substantially as it flows over the guides. The velocity is accordingly reduced to the low magnitude by expanding the volume of the transversely-flowing coolant. A perforated shroud is interposed between the nozzles and the upper internals. This shroud and associated components are so structured, in the light of pressure gradations in the outflowing coolant, that the outflow takes place over the whole surface of the shroud, correspondingly expanding the volume of the outflow.

The invention will become more readily apparent from the following description of a preferred embodiment thereof shown, by way of example only, in the accompanying drawings, in which:

Fig. 1 is a view in transverse section of an embodiment of this invention;

Fig. 2 is an enlarged fragmental view of the portion of Fig. 1 contained in circle II;

Fig. 3 is a view in longitudinal section taken along line III—III of Fig. 1;

Fig. 4 is a view in side elevation taken in the direction IV—IV of Fig. 1 showing the shroud used in the practice of this invention;

Fig. 5 is fragmental, generally diagrammatic view in longitudinal section illustrating an aspect of this invention;

Fig. 6 is a view in side elevation showing a shroud in accordance with a modification of this invention; and

Fig. 7 is a view in side elevation showing a shroud in accordance with another modification of this invention.

A nuclear reactor 11 as shown in the drawings is of the light-water pressurized type (PWR).

The reactor 11 includes a pressure-tight vessel 13 of conventional construction. The vessel 13 includes a plurality of inlet nozzles 15 for conducting the coolant into the vessel 13 and a plurality of outlet nozzles 17 for conducting coolant out of the vessel. Typically, as shown, there are two pairs of two inlet nozzles 15 each, and two pairs of two outlet nozzles 17 each, interposed between the inlet nozzles. A shell section 19 is sealed (welded) to the inner wall of the vessel opposite each pair of inlet nozzles 15. The shell sections 19 guide the coolant to the lower regions of the vessel.

Within the vessel there are the lower internals 21, which include the nuclear core 22, and the upper internals 23. The core 22 includes the fuel assemblies 25 and thimbles 27 for receiving the neutron-absorbing rod control clusters 29, the grey rod control clusters 31 and the water displacement control rods 35. The fuel assemblies 25 are mounted between upper 39 and lower supports 37 which are sometimes referred to as upper and lower core plates. The structure of the lower internals 21 is conventional.

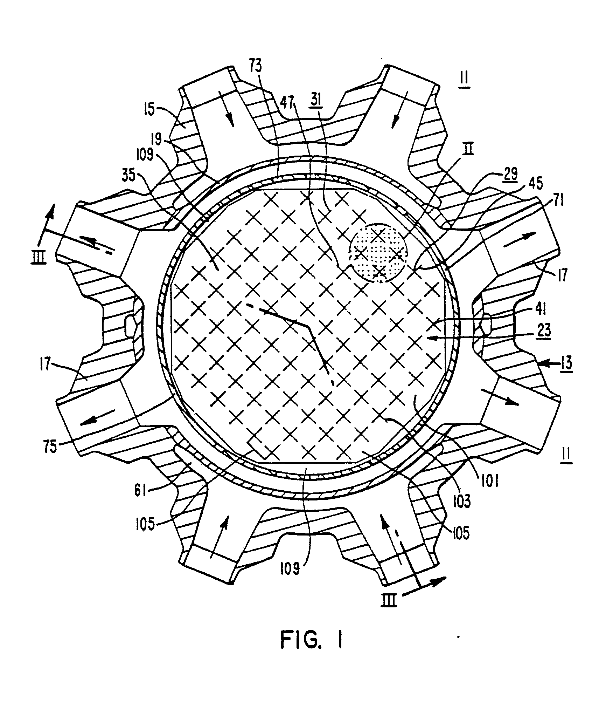

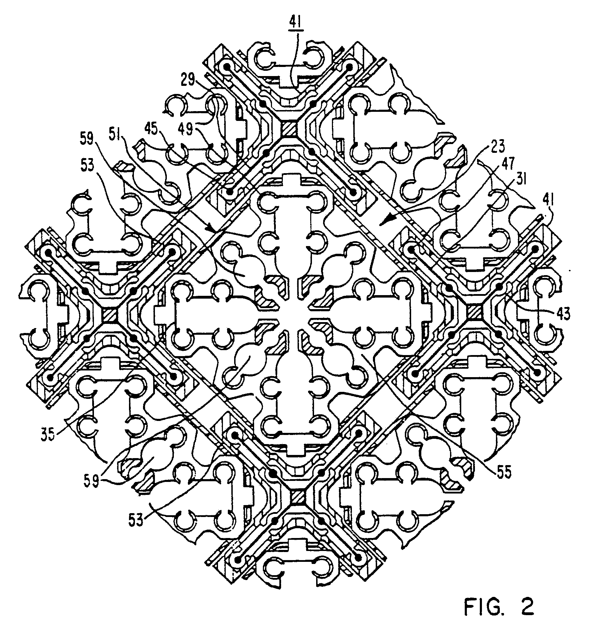

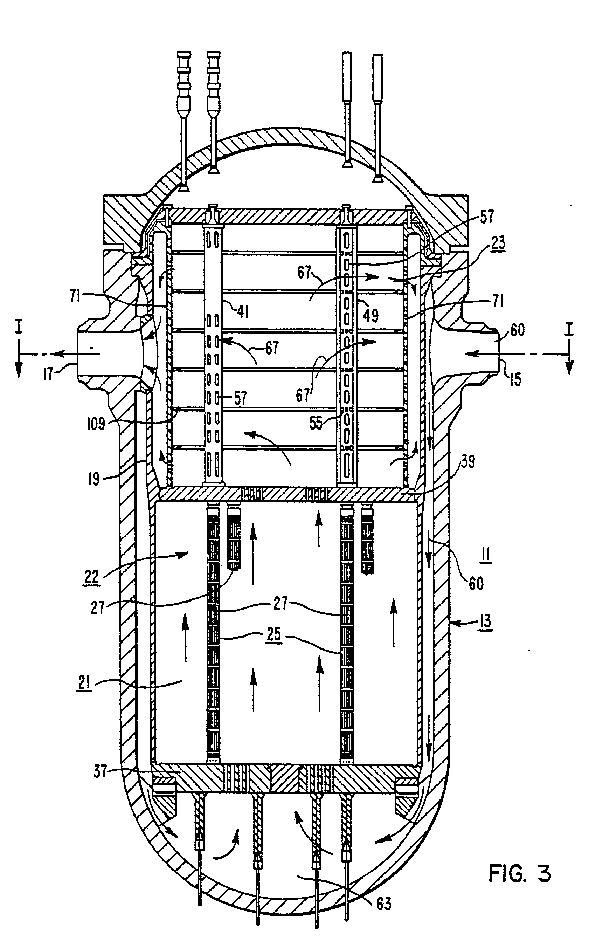

The upper internals (Fig. 2) include the cruciform guides 41 for the RCC's and for the grey rods. These guides 41 include a plurality of plates 43 which extend vertically from the walls of the arms of the cruciforms 41 and which are formed to guide the RCC's 45 or grey rods 47 (Fig. 1). The guides 49 for the WDRC's 35 are contained within generally square or rectangular shells 51. The sides of each shell 51 are parallel to and extend along inwardly extending arms 53 of four adjacent cruciform guides 45 or 47. The guides 49 are formed in plates 55 which extend vertically along the shells 51. The cruciform guides 41 and the shells 51 have slots 57 (Fig. 3) through which coolant flows. The plates 55 also have holes 59 (Fig. 2) through which coolant is permitted to flow.

In this application and in its claims, the cooperative parts or assemblies of the reactor, including the guides 41 and 49, the shell 51, the WDRC's 35, the RCC's 45, and the grey rods 47, are referred to as control rod assemblies. In the normal operation of a nuclear reactor, during the earlier part of the fuel cycle, the WDRC's 35 are in the core 22, the RCC's 45 are in the upper internals and the positions of the grey rods 47 are dependent on the loading.

The coolant flows inwardly through the inlet nozzles 15 as depicted, by the arrows 60 and through the annular sections 61 between the sections 19 and the wall of vessel 13. In these annular sections, the coolant is guided downwardly into plenum 63 (Fig. 1) whence the coolant flows upwardly through lower core plate 37, the core 22 and the upper core plate 39, as depicted by the arrows 65. The coolant then flows into the upper internals, out of the guides, and out through the outlet nozzles 17. In the region of the upper internals 23 the flow is deflected at right angles and the coolant flows through the upper internals generally transversely, as depicted by the arrows 67. Coolant flowing at a high speed transversely to the guides 41 and 49 and shells 51 of the upper internals and the WDRC's 35, as occurs in apparatus in accordance with prior art teaching, would cause these components to vibrate or be subject to high stress and to fail.

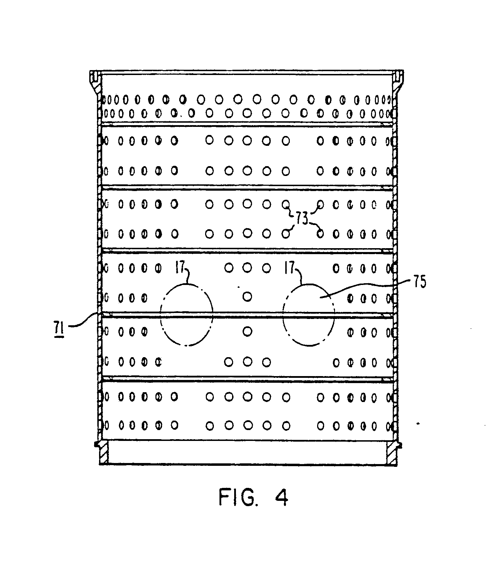

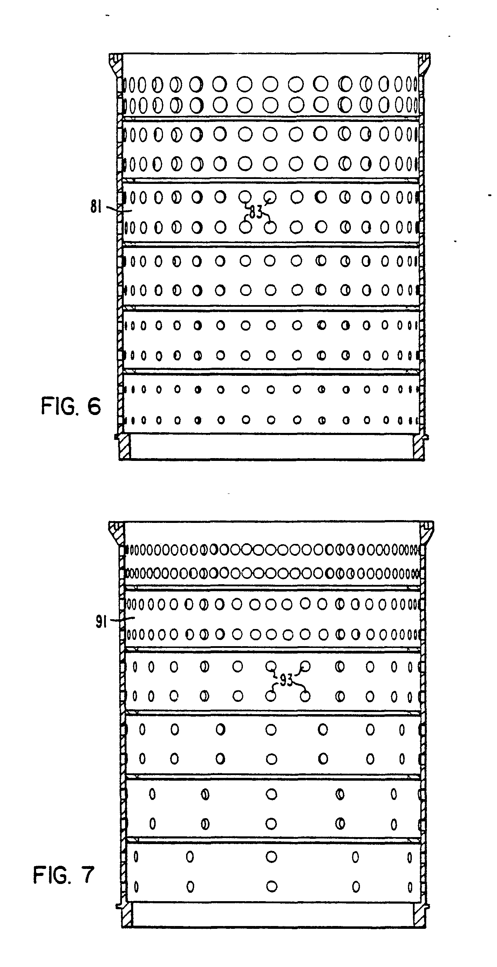

The upper internals 23 are encircled by a shroud 71 which is interposed between the upper internals and the nozzles 15 and 17. The shroud 71 has holes 73 except in the regions 75 opposite the outlet nozzles 17 as shown in Fig. 4. Flow of coolant directly through the outlet nozzles 17 is thus prevented. In the shroud 71, shown in Fig. 4, the holes 73 are generally of the same area and are generally equally spaced except in the regions 75. In the shroud 81, shown in Fig. 6, the holes 83 progressively increase in area vertically from the bottom of the shroud to the top. In the shroud 91, shown in Fig. 7, the holes 93 are of the same area but increase in number progressively vertically from the bottom to the top. The concepts of Fig. 6 and Fig. 7 may be combined. The holes 93 may increase progressively in number and area from the bottom to the top.

In the interest of clarity, the shrouds 81 and 91 are shown developed in Figs. 6 and 7; i.e., as flat surfaces. In addition, hole-free regions which are opposite the outlet nozzles 17 are not shown. Shrouds 81 and 91 include such regions.

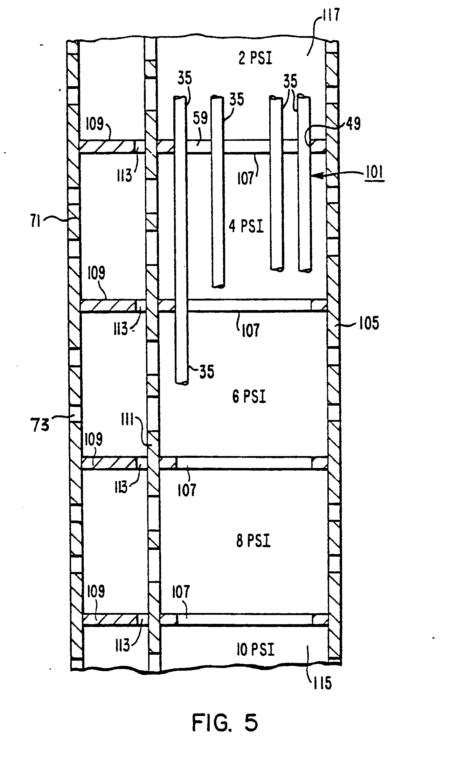

At the periphery of the internals, the groups 101 of residual WDRC's extend only between two or three inner arms 103. These peripheral WDRC groups are enclosed in irregularly shaped shells 105 (Figs. 1 and 5). The shells 105 have correspondingly shaped plates 107.

Annular plates or barriers 109 extend vertically spaced between the shroud 71 and the outer walls 111 of the peripheral shells. There is a small gap 113 between each plate and the wall 111.

The purpose of these barriers is illustrated in Fig. 5. The pressure of the coolant confined by flow restricting plates 107 decreases progressively from the lower region 115 defined by the plates 107 to the upper region 117. Different pressures are depicted in Fig. 5 for illustrative purposes. The plates and barriers assure that the outflowing coolant is distributed over a large area and its velocity is reduced to a low magnitude.

## Claims

1. A nuclear reactor including a vessel, a nuclear core (22) within said vessel (13), an inner shell (19) disposed within said vessel (13) in spaced relationship therefrom so as to provide a coolant flow path to the bottom of said vessel (13), said vessel (13) having at least an inlet nozzle (15) in communication with said annular flow path and an outlet nozzle (17) in communication with a plenum above said core (22) which is surrounded by said inner shell (19) for circulating coolant through said core (22), control-rod guide assemblies (41) arranged within said vessel (13), and including control rods movable from the plenum above said core (22) into said core (22), drive rods for said control rods (35) and guide assemblies (41) for said control rods (35) within said plenum, the in-flowing coolant after passing through said core (22) flowing transversely through said control-rod guide assemblies (41) to said outlet nozzle (17) in the normal operation of said reactor, and having a flow restricting shroud (71) which surrounds said control-rod guide assemblies (41) in spaced relationship from said inner shell (19) so as to be disposed in the path of said transversely-flowing coolant, characterized by said shroud having along substantially the whole extent thereof holes of a size adapted to restrict coolant flow to said outlet nozzle (17), and having no holes in a limited region thereof opposite the outlet nozzle (17) to thereby suppress direct flow of said transversely-flowing coolant from the control-rod guide assemblies (41) to said outlet nozzle (17).

2. A nuclear reactor as claimed in claim 1, characterized in that the flow areas of the holes (73, 83, 93) in the shroud (71, 81, 91) increases progressively from its lower region to its upper region in accordance with the variation of the pressure of the transversely-flowing coolant between said lower region and said upper region (Figures 4, 6 and 7).

3. A nuclear reactor as claimed in claim 1 or 2, characterized in that the number of holes (83, 93) in the shroud (71, 91) increases progressively from its lower region to its upper region in accordance with the variation in pressure of the transversely-flowing coolant between said lower region and said upper region (Figures 4 and 7).

4. A nuclear reactor as claimed in any of claims 1 to 3, characterized in that annular barrier plates (109) extend between the shroud (71) and the control-rod guide assemblies (41) at locations spaced along the vertical length of the shroud (71) and assemblies (41) to restrict axial flow of coolant in the annular region between said shroud (71) and said control-rod guide assemblies (41).

## Patentansprüche

1. Kernreaktor mit einem Behälter, einem innerhalb des Behälters (13) befindlichen Reaktorkern (22), einem innerhalb des Behälters (13) mit Abstand dazu angeordneten inneren Mantel (19), so daß ein Kühlmittelströmungsweg zum Boden des Behälters (13) gebildet ist und wobei der Behälter (13) mindestens einen Einlaßstutzen (15), der mit diesem ringförmigen Strömungsweg in Verbindung steht und einem Auslaßstutzen (17) aufweist, der in Verbindung mit einer Sammelkammer oberhalb des Kerns (22) steht, der von dem ineren Mantel (19) umschlossen ist, um Kühlmittel durch den Kern (22) hindurchzuleiten, weiter mit im Behälter (13) angeordneten Steuerstabführungsbaugruppen (41) mit von der Sammelkammer oberhalb des Kerns (22) in den Kern (22) hinein bewegbaren Steuerstäben, Antriebsstangen für die Steuerstäbe (35) und Führungsbaugruppen (41) für die Steuerstäbe (35) innerhalb der Sammelkammer, wobei das einströmende Kühlmittel nach dem Durchtritt durch den Kern (22) im normalen Betrieb des Reaktors quer durch die Steuerstabführungsbaugruppen (41) zu dem Auslaßstutzen (17) strömt, und mit einer Strömungsdrosselhülse (71), welche die Steuerstabführungsbaugruppen (41) mit Abstand von dem inneren Mantel (19) umschließt, so daß sie sich im Strömungsweg des querströmenden Kühlmittels befindet, dadurch gekennzeichnet, daß die Hülse im wesentlichen entlang ihrer gesamten Ausdehnung Öffnungen einer solchen Größe aufweist, daß die Kühlmittelströmung zu dem Auslaßstutzen (17) gedrosselt wird, und innerhalb eines begrenzten Bereiches vor dem Auslaßstutzen (17) keine Öffnungen aufweiste, um so einen direkten Zustrom des querströmenden Kühlmittels von den Steuerstabführungsbaugruppen (41) zum Auslaßstutzen (17) zu unterdrücken.

2. Kernreaktor nach Anspruch 1, dadurch gekennzeichnet, daß die Strömungsquerschnitte der Öffnungen (73, 93) in der Hülse (71, 81, 91) von ihrem unteren Bereich zu ihrem oberen Bereich entsprechend der Druckänderung des querströmenden Kühlmittels zwischen dem unteren Bereich und dem oberen Bereich fortschreitend zunehmen (Fig. 4, 6 und 7).

3. Kernreaktor nach Anspruch 1 oder 2, dadurch gekennzeichnet, daß die Anzahl der Öffnungen (83, 93) in der Hülse (71, 91) von ihrem unteren Bereich zu ihrem oberen Bereich entsprechend der Druckänderung in dem querströmenden Kühlmittel zwischen dem unteren Bereich und dem oberen Bereich fortschreitend zunimmt (Fig. 4 und 7).

4. Kernreaktor nach einem der Ansprüche 1 bis 3, dadurch gekennzeichnet, daß an mit Abständen entlang der vertikalen Länge de Hülse (71) und der Baugruppen (41) ringförmige Sperrplatten (109) zwischen der Hülse (71) und den Steuerstabführungsbaugruppen (41) verlaufen, um die Axialströmung des Kühlmittels im Ringbereich zwischen der Hülse (71) und den Steuerstabführungsbaugruppen (41) zu drosseln.

**Revendications**

1. Réacteur nucléaire comprenant une cuve, un coeur nucléaire (22) dans ladite cuve (13), und enveloppe intérieure (19) disposée dans ladite cuve (13) à distance de celle-ci, de manière à fournir un passage d'écoulement de caloporteur vers le fond de ladite cuve (13), ladite cuve (13) possédant au moins une tubulure d'admission (15) en liaison avec ledit passage d'écoulement annulaire et une tubulure de sortie (17) en liaison avec une chambre se trouvant au-dessus dudit coeur (22) qui est entourée par ladite enveloppe intérieure (19) pour faire circuler le caloporteur à travers ledit coeur (22), des assemblages (41) de guidage de barres de contrôle disposes dans ladite cuve (13), et comprenant des barres de contrôle qui peuvent être déplacées à partir de la chambre se trouvant au-dessus dudit coeur (22) jusque dans ledit coeur (22), des barres d'entraîement pour lesdites barres de contrôle (35) et des assemblages de guidage (41) pour lesdites barres de contrôle (35) dans ladite chambre, le caloporteur entrant, après avoir traversé ledit coeur (22), s'écoulant transversalement à travers lesdits assemblages (41) de guidage de barres de contrôle vers ladite tubulure de sortie (17) lors du fonctionnement normal dudit réacteur, et possédant une virole (71) de limitation d'écoulement qui entoure lesdits assemblages (41) de guidage de barres de contrôle à distance de ladite enveloppe intérieure (19) de manière a étre disposée sur le passage dudit caloporteur s'écoulant transversalement, caractérisé en ce que ladite virole possède, sensiblement sur toute sa hauteur, des trous d'une taille adaptée pour restreindre l'écoulement du caloporteur vers ladite tubulure de sortie (17), et ne possède pas de trous dans une zone limitée située en face de la tubulure de sortie (17) afin d'empêcher ainsi l'écoulement direct dudit caloporteur s'ecoulant transversalement à partir des assemblages (41) de guidage de barres de contrôle vers ladite tubulure de sortie (17).

2. Réacteur nucléaire selon la revendication 1, caractérisé en ce que la section d'écoulement des trous (73, 83, 93) dans la virole (71, 81, 91) augmente progressivement à partir de sa zone inférieure vers sa zone supérieure, suivant la variation de la pression du caloporteur s'écoulant transversalement entre ladite zone inférieure et ladite zone supérieure (figures 4, 6 et 7).

3. Réacteur nucléaire selon la revendication 1 ou 2, caractérisé en ce que le numbre de trous (83, 93) dans la virole (71, 91) augmente progressivement à partir de sa zone inférieure vers as zone supérieure, suivant la variation de la pression du caloporteur s'écoulant transversalement entre ladite zone inférieure et ladite zone supérieure figures 4 et 7).

4. Réacteur nucléaire selon l'une quelconque des revendications 1 à 3, caractérisé en ce que des plaques de barrière annulaires (109) s'étendent entre la virole (71) et les assemblages (41) de guidage de barres de contrôle à des endroits espacés le long de la dimension verticale de la virole (71) et des assemblages (41), afin de restreindre l'écoulement axial du caloporteur dans la zone annulaire entre ladite virole (71) et lesdits assemblages (41) de guidage de barres de contrôle.

FIG. 1

FIG. 2

FIG. 3

FIG. 4

FIG. 5

FIG. 6

FIG. 7